# EUROPEAN PATENT APPLICATION

(11) **EP 2 450 728 A1**
(43) Date of publication of application: **09.05.2012**
(21) Application number: 10251906.3
(22) Date of filing: 05.11.2010
(51) Int. Cl.: G02B 6/44, G02B 6/48

(54) **Optical fibre tray**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A fibre tray (10) for use with a fibre tube (20), the fibre tube being arranged in use to receive within it an optical fibre, the fibre tray comprising
- guiding means to guide the fibre tube in a winding configuration to prevent or discourage movement of the optical fibre within the fibre tube by effect of friction between the optical fibre and the fibre tube within the fibre tube, and
- holding means to maintain the winding configuration of the fibre tube with the optical fibre within it.

## Description

The present invention relates to methods and apparatus relating to the installation of cables, particularly but not exclusively to optical fibre trays used in distribution points in telecommunications networks.

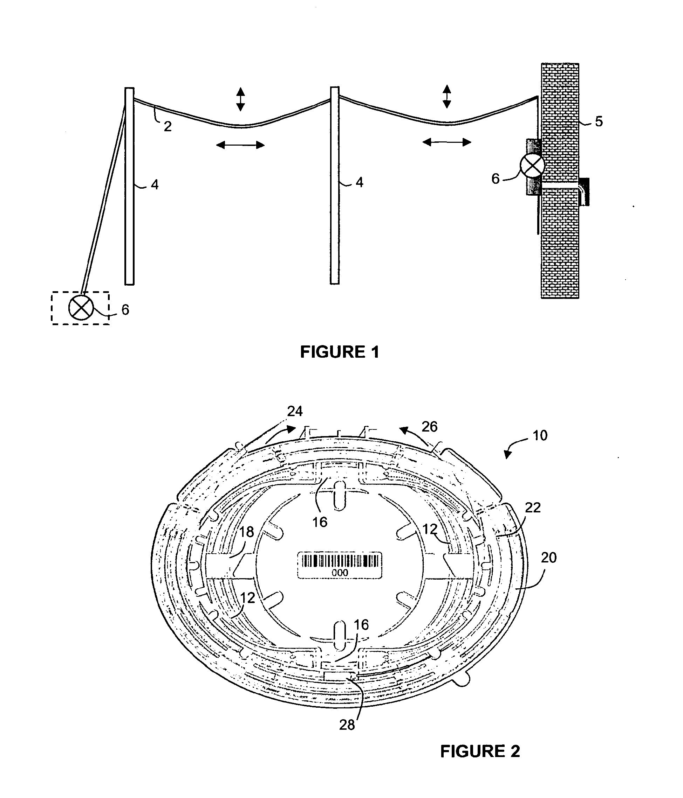

Currently, the majority of the UK's residential customers obtain their telecommunications connections via aerial or overhead copper cables or wires originating from a local distribution point within the access network, in which lengths of dropwire or aerial cable are suspended between utility or telephone poles which lead to each of the premises served by the distribution point as depicted in Figure 1.

In use, overhead cables face high levels of and variations in environmental stress. Load factors in the form of temperature changes, wind, rain, ice build-up, birds, as well as the cable's own weight put a tensile load on the cable, particularly at its ends, resulting in expansion and contraction of the cable.

One way of increasing capacity in access networks is to upgrade the "last mile" link by replacing copper wires with optical fibre. This can take the form of "blown fibre" which is optical fibre installed using e.g. the technique described in EP108590, wherein an empty fibre duct or tube is first installed along the route between the two points to be connected. A fibre element - one or more individual optical fibres making up a fibre unit - can separately be installed into the waiting tube at a later date, by inserting it through using compressed air to generate viscous drag along the surface of the fibre unit. In this description, depending on context, references to "cables" can be used interchangeably with references to individual optical fibres and bundles of fibre units as well as cables comprising such fibres and fibre units, and tubes including the various types of conduits and ducts deployed along various sections of the network.

Optical fibre (installed using conventional fibre cables, or the blown fibre method) can be deployed for aerial use as well, although special considerations are required to take into account the fragility of the fibre and other properties particular to fibre which do not exist in copper cables, such as the minimum bend radius of optical fibres and strain. Optical fibre is already susceptible to both mechanical failure (e.g. hairline cracking and breakage) and optical loss (e.g. signal attenuation from excessive bending). When used in a high-tension overhead installation, these problems are exacerbated.

In aerial installations, optical fibre is terminated at each end typically in a splice in a joint closure. In the case of blown fibre, the blown fibre element is not coupled to the tube in which it lies, or any part thereof: it remains completely loose within the blown fibre tube within the span, which may extend across several telephone poles. This may be considered in contrast with conventional optical cables, wherein the fibre elements are bound to or within its protective sheathing. This has the advantage of allowing the fibre element a degree of movement within the tube in use between splice or connection points across the entire fibre span.

Advantageously, this allows for compensation and equalisation of the effects of loading on the external cable tube e.g. during temperature change, across the entire span. However, this also means that the fibre element is spliced or otherwise connectorised at its ends independently of the rest of the cable, in contrast with conventional optical cables which are secured as a whole at its ends. Stresses and strains propagated along the cable in the form of e.g. shear stress, torsion, excessive vibrations, or the like can act on mechanically and structurally weak points such as splices. It is known that optical fibre generally can cope with stresses (tensile or compressive) by e.g. stretching, but levels beyond this can cause premature optical failure. At an extreme, the fibre may be physically damaged, pulled out or snapped at splice points and other weak sections along its length.

It is therefore important to ensure that blown fibres are secured at each end of the span in a way which allows the fibre to cope with the expected environmental loading during use, in accordance with its physical and operational characteristics, and in a way which allows the fibre unit a degree of freedom of movement in the overhead section of the network. At the same time it is essential to ensure that no excessive pulling or strain is put on the fibre splice or connection, as this is a point of weakness along the fibre span, requiring protection against degradation in performance or in structure.

Optical cable securing methods include the simple clamping the cable to restraints or the like at each end. This would not work well for blown fibre as doing so introduces compressive forces on the fibre, creating an additional point of weakness along the fibre unit.

In EP1557707 in the context of conventional optical cables, a portion of the cable is looped to form coupling coils so that internal fibres are frictionally coupled to the buffer tube to prevent fibre movement relative to other members of the cable. Another approach is described in FR27074345 in which conventional optical cable (i.e. not blown fibre) is suspended horizontally from pylons. The cable is wound in a helical fashion along a groove of an inner cone or cylinder. An outer section fits over the inner section including the wound cable. The cable sandwiched between the two sections is thus secured. The applicants have a solution in an aerial application in WO2007/113522, wherein a section of fibre within a blown fibre tube is wound in a figure-of-eight configuration, to cause the optical fibre element to frictionally engage with the inner side walls of the tube, which prevents movement of the fibre when wound within the tube.

All the above solutions involve components and installations of considerable size. The push to providing greater capacity to customers (FTTx), the amount of fibre moving into the access network is increasing at significant rates, and space to accommodate the extra plant and equipment to deal with the increase is rapidly running out. There is simply not enough if any room at all to use the above approaches to securing optical fibres. It is well known that one of the major factors holding back the deep deployment of optical fibre in the access network is the time, cost and complications of the civil engineering exercise needed to physically accommodate the fibre and all associated infrastructure. It would be a great boon to use what physical capacity there already is by using up any "dead space" in an efficient manner.

In this vein, the applicants' co-pending application EP1025137.0 is directed to a solution also based on frictionally engaging the fibre with the inner side wall of the tube, to reduce or prevent movement of the fibre when wound within the tube, again using the capstan effect along the lines of that set out in WO2007/113522, but in a smaller footprint, allowing for deployment within a joint closure.

However, the relentless pressure on space within the existing access network infrastructure is such that in some implementations, a solution even smaller than even that covered in EP1025137.0 is desired.

It would be desirable to secure blown fibre deployed in aerial installations to protect weak sections from excessive stresses placed upon its length, in a less obtrusive manner which is less vulnerable to physical damage, in a manner which takes up minimal space.

According to a first aspect of the invention, there is provided a fibre tray for use with a fibre tube, the fibre tube being arranged in use to receive within it an optical fibre, the fibre tray comprising
- guiding means to guide the fibre tube in a winding configuration to prevent or discourage movement of the optical fibre within the fibre tube by effect of friction between the optical fibre and the fibre tube within the fibre tube, and
- holding means to maintain the winding configuration of the fibre tube with the optical fibre within it.

Winding the fibre tube with the fibre element within it causes the surface of the fibre to frictionally engage with the inner surface of the fibre tube. This helps reduce or discourage movement of the fibre unit, with the overall effect that the fibre is locked within the tube for most of its length. This capstan effect is enhanced with the use of a fibre tube with a high friction internal liner. Preferably, the components defining and guiding the path to be taken by the tube, as well as the means for holding the tube in the defined position, take the form of tabs.

According to a second aspect of the invention, there is provided a distribution point comprising a fibre tray of the invention.

According to a third aspect of the invention, there is provided an aerial telecommunications system including a distribution point of the invention.

According to a further aspect of the invention, there is provided a method of using a fibre tray to secure an optical fibre by discouraging its movement within a fibre tube by effect of friction between the optical fibre and the fibre tube within the fibre tube, comprising
- installing the optical fibre into the fibre tube,
- on the fibre tray, guiding the fibre tube in a winding configuration to cause the optical fibre to frictionally engage with an inner wall of the fibre tube, and
- maintaining the winding configuration of the fibre tube with the optical fibre within it.

Systems, methods and apparatus embodying the present invention will now be described by way of example only, with reference to the following drawings, wherein:
Figure 1 is a schematic diagram showing an overhead installation between a distribution point and customer premises,
Figure 2 is a top, plan, view of the tray of the invention,
Figure 3 shows a module of trays,
Figure 4 shows an assembly of modules of trays in a distribution point,
Figure 5 shows a fibre distribution point on a mounting arm, and
Figures 6A, 6B and 6C are schematic views of the use of the distribution point.

Figure 1 is a schematic view of a part of a network delivering a telecommunications service to customer premises by an overhead feed, using the blown fibre technique. An empty blown fibre tube (2) is initially provisioned on utility or telephone poles (4) along a path between customer premises and a distribution point, here represented by a joint closure box (6), which includes an optical node. The distribution point or node can be located in an underground footway box accessible via a manhole, in a cabinet at ground level, up a telegraph pole (4), or on customer premises (5). As and when a link is to be provided to the customer premises, an optical fibre is installed by blowing it through the pre-provided fibre tube (2), which is then terminated at the customer end at a network termination point (6). The aerial optical span (2) therefore comprises one or more optical fibre elements which are lying loose, and free to move in all directions, within the tube, between the end points (6) at which they are spliced to continue the link onwards, respectively towards the exchange and, in the opposite direction, into the customer premises. It is therefore necessary to ensure that the fragile splices at each end are protected from tension and stress, especially during times when load is placed on the span by environmental and other factors.

Figure 2 is a view of the upper face of a splice tray (10) of the invention for use with optical fibre (12) which is installed using the blown fibre method through optical fibre tube. Such a tray forms part of a distribution point or module (6, also discussed further below), and serves to house the fragile splice formed between two optical fibres, one of which would lead to and from an optical aerial installation of the type described above. The splices are housed in a splice sleeve or protector (16) on the tray, of which there are four in the tray shown in Figure 2. Not all the fibre brought into the tray may be spliced, and so the unspliced fibres, as well as excess lengths of fibre which is spliced, are stored in a winding configuration against the tray and held in place with tabs (18) which extend upwardly from the face of the tray, which are positioned to respect the minimum bend radius of the fibre to prevent overbending.

Functionally therefore, the tray depicted is similar to conventional splice trays, save that it is further configured to accommodate a length of fibre tube (20) which serves a fibre "locking" function which secures the fibre against movement within the tube in the manner described below. This locking effect is obtained from the frictional engagement of the fibre with the inner side wall of the tube, to reduce or prevent movement of the fibre when wound within the tube along the lines of that set out in the applicant's previous applications WO2007/113522 and EP1025137.0 mentioned above.

In the embodiment shown, a fibre (12) extending through the tube (20) exits the tray so that it leads to/from the aerial fibre span (2) at one end (24), and to/from e.g. the customer premises (26) at the other end.

Fibre from the network side (24) is typically under tension as it enters the tray within a tube (20). In the embodiment shown in the drawing, tube tabs (22) guide the fibre within the tube to wind through 2.5 turns, although the number of turns sufficient to discourage or prevent movement would depend on the particular application, e.g. the expected levels of load, the fibre type. The tabs guide the tube so that each wind (comprising one full turn) in the winding path taken by the fibre tube, is greater than the minimum bend radius, to prevent the adverse effects of overbending.

The fibre then exits the tube, the tube being preferably fitted with a water blocker or water block mechanism (28) connected to that end of the tube, which serves to prevent any moisture present in the tube carried in from the external network from adversely affecting the splice. The now un-tubed fibre is then spliced, and the splice is stored in a sleeve (16) as noted above. Excess fibre is stored against the tray face, and then eventually led out of the tray on the low-tension end (26) as a bare, un-tubed, fibre.

When loading is placed on the cable span (2) at any point along its length, the fibre moves within the tube along its length to try to find equilibrium along the span. The effect of the strain is transmitted towards the ends of the installation, and the fibre within the tube wound around the securing device is then subject to pulling. During such times, the fibre on the network side (24) would undergo even more movement and pulling within the tube. This would be the case for the fibre on the tray even some way into the 2.5 turns on the tray. The tension would however decrease gradually through the turns of the fibre within the tube, owing to the accumulation of frictional forces between the inner sidewall of the tube and the fibre over the entire length of the fibre tube resulting from the capstan effect. This locking effect can be enhanced by use of a high friction tube which inner surface is specifically configured to further to discourage movement of the optical fibre lying within it, through the provision of a high friction internal surface. In this way, no specific point locking is imposed on the fibre, which as noted above, would introduce a fresh point of weakness along its length.

After the tubed fibre has gone through the full number of turns, the tension and pulling of the external aerial network or span is entirely or mostly dissipated. The fibre on the tray emerging from the tube at the water blocker (28) is under little or no tension. The splice formed on this low/no-tension length of fibre is thus protected or isolated from the tension or fibre movement within the tube within the aerial span (2).

The skilled person would appreciate that the tray can be alternatively configured so that during use, the fibre element need not be fully and immovably locked within the fibre tube when the tube is wound. Instead the fibre could be loose within the tube and allowed a measure of movement, unless and until a load exceeding a predetermined amount is put on the high-tension end of the fibre (24), at which point the fibre will be pulled in the direction of the arrow shown to cause the fibre to tighten against the inner surface of the tube for frictionally engagement to effectively lock the fibre.

In use, the engineer or user would take a fibre incoming from the network (24), manually push the fibre through a straightened length of fibre tube (20), wind it around the tube tabs (22) which hold or maintain the winding configuration of the optical fibre within the fibre tube, fit and activate the water blocker (28), and then work with the tension-free fibre to form the fusion splice. The resulting splice is then placed into its protective sleeves, the fibre led out of the tray on the outgoing end (26), and any excess fibre length stored using the storage tabs (18) on the tray.

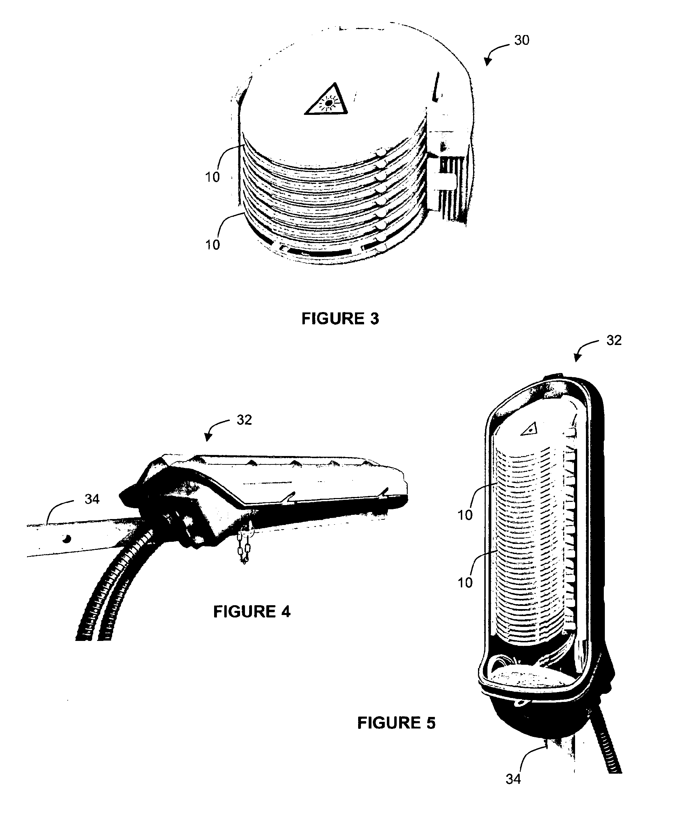

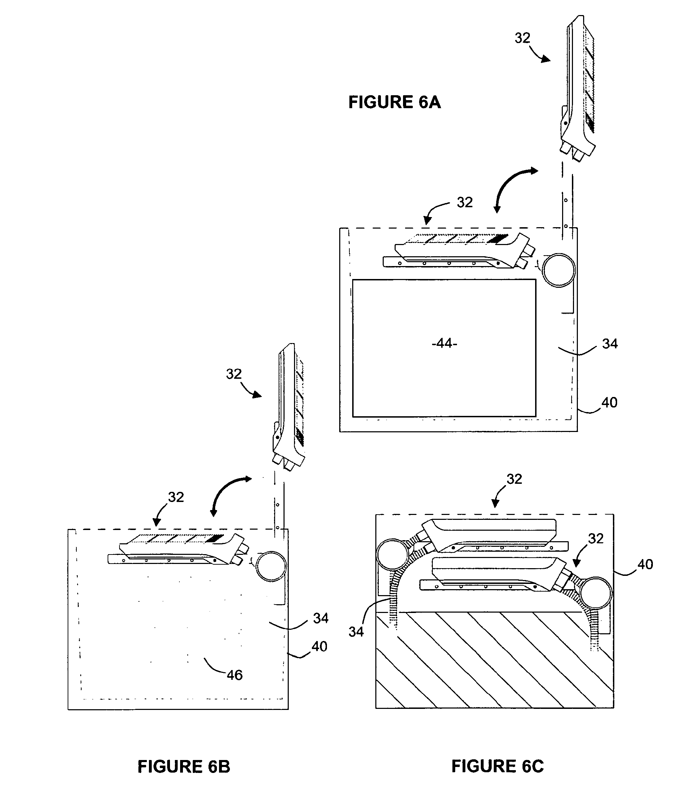

Figure 3 depicts a bank (30) of 9 trays (10) making up a module or part thereof, for incorporation into a 32-address point fibre distribution point (32) such as a splitter array sub-assembly (SASA) or a splice/storage only sub-assembly (SOSA), suitable for FTTx use of the type depicted, in Figure 4. A distribution point of this type is depicted also in Figure 5 with its cover on, and mounted on a mounting arm (34). Preferably, the mounting arm is configured to permit the distribution point to be moved, e.g. by pivoting between the two positions shown in Figure 6A. In the working position, the distribution point assumes a vertical position allowing it to be opened by removal of its cover (as shown in the drawing) so that a user can access to the modules and trays to work on them. For storage, the distribution point can be moved to the horizontal position (shown also in Figure 6).

As noted above, the distribution point will be deployed in the field in a variety of environments, such as a footway box. They may be expected to be already occupied if not crowded by existing plant and equipment (44), and may often not have any space for a conventionally-sized distribution point (46) which is shown in Figure 6B for purposes of size comparison. The smaller overall dimensions of the distribution point (32) can ideally allow for many more connections and splices to be accommodated within the limited space remaining through use of a number of such distribution points, as depicted in Figure 6C.

With the distribution point (32) dimensioned to occupy a smaller space envelope, all the components thereof (including the fibre locking mechanism) consequently also need to be reduced in size. The applicants realised that the winding of fibre performed on conventional fibre trays can usefully double up in function to provide the full locking effect needed in an aerial blown fibre installation, proving to be an efficiency in financial terms as well as in space.

It would be appreciated by the skilled person that the invention can be implemented in ways other than that described specifically herein and in the drawings. As long as the fibre is wound within the tube on the tray, or within the space envelope provided within the tray stack, the advantages of the invention outlined above can be realised. Thus, for example, it is not necessary for the tube to be held using tabs as clips, or a grooved path on the face of the tray might suffice.

In other variations, the tray need not be one for holding splices, but one which serves as storage, or purely for locking purposes where a point of weakness along the fibre may be located further along the fibre span. The winding method is also no constrained to forming simple coils, but may take the form of figure-eight or other more complex configurations inside the tray.

The apparatus, methods and configurations described above and in the drawings are for ease of description only and not meant to restrict the invention to any particular embodiments. It will be apparent to the skilled person that various sequences and permutations on the apparatus and methods described are possible within the scope of this invention as disclosed. The invention can also be applied to applications outside blown fibre installations, wherever an elongate member within a tube is secured at each end experiences a pulling force transmitted along its length which should ideally be reduced or avoided.

## Claims

1. A fibre tray for use with a fibre tube, the fibre tube being arranged in use to receive within it an optical fibre, the fibre tray comprising
- guiding means to guide the fibre tube in a winding configuration to prevent or discourage movement of the optical fibre within the fibre tube by effect of friction between the optical fibre and the fibre tube within the fibre tube, and
- holding means to maintain the winding configuration of the fibre tube with the optical fibre within it.

2. A fibre tray according to claim 1 wherein each wind in the winding configuration is equal to or greater than an optical fibre minimum bend radius of the optical fibre.

3. A fibre tray according to claim 1 or claim 1 further including a fibre splice protector.

4. A fibre tray according to any preceding claim wherein the fibre tube comprises a high friction internal surface.

5. A fibre tray according to any preceding claim wherein the guiding means and the securing means comprise tabs for holding the fibre tube against the tray.

6. A fibre tray according to any preceding claim wherein the winding configuration comprises two and a half turns.

7. A distribution point comprising a fibre tray of any preceding claim.

8. A distribution point of claim 7 mounted on a moveable mounting arm permitting movement of the distribution point between a working, vertical, position and a storage, horizontal, position.

9. An aerial telecommunications system including a distribution point of claim 6 or claim 8.

10. A method of using a fibre tray to secure an optical fibre by discouraging its movement within a fibre tube by effect of friction between the optical fibre and the fibre tube within the fibre tube, comprising
- installing the optical fibre into the fibre tube,
- on the fibre tray, guiding the fibre tube in a winding configuration to cause the optical fibre to frictionally engage with an inner wall of the fibre tube, and
- maintaining the winding configuration of the fibre tube with the optical fibre within it.

11. A method according to claim 10 wherein each wind in the winding configuration is equal to or greater than an optical fibre minimum bend radius of the optical fibre.
